# EUROPÄISCHE PATENTSCHRIFT

(11) **EP 2 030 370 B1**
(45) Veröffentlichungstag und Bekanntmachung des Hinweises auf die Patenterteilung: **27.07.2011**
(21) Anmeldenummer: 07711699.4
(22) Anmeldetag: 27.02.2007
(51) Int. Cl.: H04L 12/28

(54) **VERFAHREN ZUR IDENTIFIZIERUNG VON VERSTECKTEN KNOTEN IN EINEM AD-HOC-NETZ**
METHOD FOR IDENTIFYING CONCEALED NODES IN AD-HOC NETWORK
PROCÉDÉ POUR IDENTIFIER DES NOEUDS CACHÉS DANS UN RÉSEAU AD HOC

(30) Priorität: 10.03.2006 DE 102006011274; 26.03.2006 DE 102006014311
(43) Veröffentlichungstag der Anmeldung: 04.03.2009
(73) Patentinhaber: Rohde & Schwarz GmbH & Co. KG, 81671 München (DE)
(72) Erfinder: LANGGUTH, Torsten, 82008 Unterhaching (DE); SCHOBER, Henrik, 85457 Wörth (DE); NICOLAY, Thomas, 85622 Feldkirchen (DE)
(74) Vertreter: Körfer, Thomas
(86) Internationale Anmeldenummer: PCT/EP2007/001683
(87) Internationale Veröffentlichungsnummer: WO 2007/104425

(56) Entgegenhaltungen:
- EP-A- 1 624 627
- WO-A-03/088587
- US-A- 5 661 727
- US-A1- 2005 175 009

## Beschreibung

Die Erfindung betrifft ein Verfahren zur Identifizierung von versteckten Knoten in einem ad-hoc-Netz.

Ein mobiles ad-hoc-Netz (MANET) besteht aus einer Menge von Funkgeräten, die dynamisch ein temporäres Netz bilden, indem jedes Funkgerät als Router für die jeweils anderen Funkgeräte dient und somit keine zentrale Infrastruktur benötigt wird. Siehe WO 03/088 587.

Ein wichtiger Punkt bei MANETs ist die Koordination des Zugriffs auf die gemeinsam genutzte Übertragungsressource. Es darf jeweils nur ein Gerät senden, da sonst Kollisionen auftreten, die zum Verlust der gesendeten Informationen führen.

Ein Medium-Access-Control(MAC)-Protokoll koordiniert den Zugriff und definiert, wie die Funkgeräte die begrenzte Übertragungsressource effizient und fair teilen können. Gerade im ad-hoc-Bereich sind MAC-Verfahren sehr weit verbreitet, die die Koordination des Kanalzugriffs auf der Basis von Informationen über die Kanalbelegung vornehmen. Solche Verfahren werden unter dem Begriff Carrier-Sensing-Multiple-Access (CSMA) zusammengefaßt. Ein weit verbreitetes WLAN-Verfahren IEEE 802.11 basiert auf CSMA.

Bei CSMA-Verfahren überwachen alle sendewilligen Stationen das Medium. Wenn das Medium bereits belegt ist, warten die sendewilligen Stationen. Wenn das Medium nicht belegt ist, dürfen sendewillige Stationen das Medium belegen und senden. Zur Vermeidung von Kollisionen am Ende einer Übertragung kann der Kanalzugriff durch eine zufällige Wartezeit gesteuert werden. Verschiedene Stationen haben am Ende einer Übertragung unterschiedliche Wartezeiten, so dass eine Station das Medium zuerst belegt. Die anderen Station erkennen dies durch die Kanalüberwachung und treten vom Sendewunsch bis zum Ende der aktuellen Übertragung zurück. Das Medium wird als belegt betrachtet, wenn die empfangene Signalstärke über einem bestimmten Schwellenwert liegt.

MANETs haben dynamische, manchmal eine sich schnell ändernde, zufällige Topologie. Die Funkgeräte kommunizieren direkt mit ihrem benachbarten Funkgeräten (benachbarte Knoten), wenn diese innerhalb der Reichweite sind, oder über mehrere Zwischenknoten dienende Funkgeräte (Multi-Hop), die die Informationen an das Zielfunkgerät (Zielknoten) weiterleiten. Aufgrund der dezentralen Struktur sind solche Netz sehr robust, erfordern jedoch eine eigenständige Kontrolle und Koordination durch die einzelnen Netzknoten.

Für einen Multi-Hop-Betrieb hält jeder Funkknoten eine Routing-Tabelle mit der Topologie aller beteiligter Funkknoten vor. Diese Routing-Tabellen wird mittels Datenaustausch mit den benachbarten Funkknoten beim proaktiven Routing in einem bestimmten Zeitraster und beim reaktiven Routing nur zu den Zeitpunkten des Datenaustauschs mit den benachbarten Funkknoten aktualisiert. Findet der Quellknoten den Zielknoten in der Routing-Tabelle, so wird das zu übertragende Datenpaket vom sendewilligen Funkknoten über den Routing-Pfad aller bekannten Zwischenknoten zum Zielknoten übertragen.

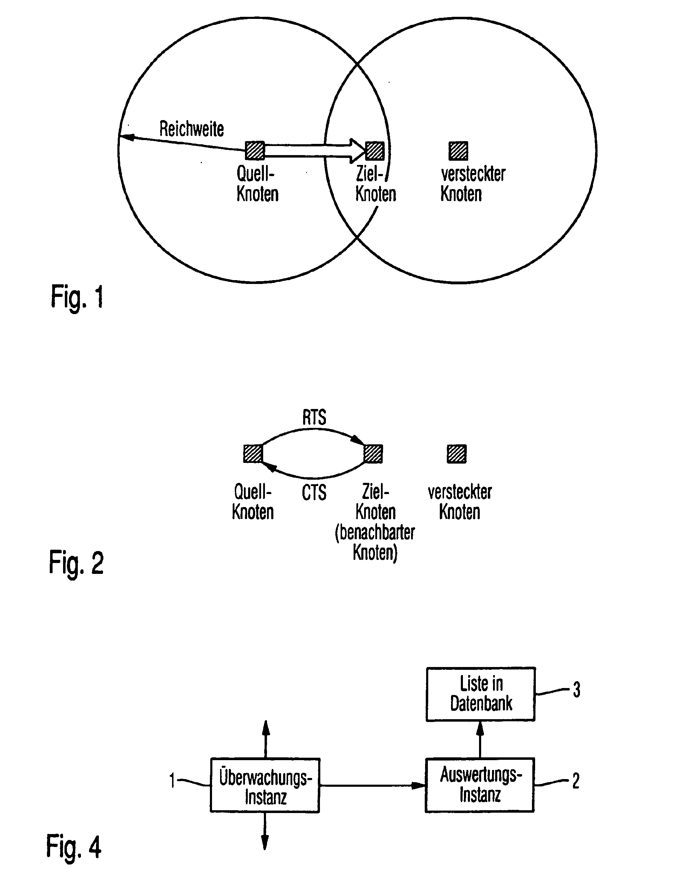

Zu einer Netzblockade kann es kommen, wenn gemäß Fig. 1 zwei Knoten, in deren Reichweite der jeweils andere Knoten nicht enthalten ist, einen identischen Zielknoten aufweisen, der innerhalb ihrer Reichweite liegt. Beabsichtigen die beiden Knoten mit ihrem identischen Zielknoten zur selben Zeit zu kommunizieren, so kollidieren ihre jeweiligen Signale. Das kann durch das CSMA-Verfahren aufgrund fehlender Koordination der beiden Knoten nicht verhindert werden. Die Leistungsfähigkeit des mobilen ad-hoc-Netzes wird durch eine derartige Netzblockade reduziert. Da die beiden sendenden Knoten jeweils außerhalb der Reichweite des anderen Knotens liegen, stellen sie jeweils versteckte Knoten für den jeweils anderen Knoten dar.

Die Identifizierung derartiger versteckter Knoten in einem MANET stellt deshalb eine wichtige Maßnahme zur Steigerung der Leistungsfähigkeit des mobilen ad-hoc-Netzes dar.

Zur Vermeidung von Kollisionen der versteckte Knoten wird häufig das RTS-CTS-Verfahren gemäß Fig. 2 verwendet. Dabei überträgt ein Sender zuerst eine kurze Nachricht (RTS), mit der die Übertragung bekannt gemacht wird. Der Empfänger antwortet ebenfalls mit einer kurzen Nachricht (CTS). Danach erfolgt die eigentliche Nutzdatenübertragung. Durch die RTS- und CTS-Signale werden alle Stationen in der Reichweite des Senders und Empfängers über die Übertragung informiert. Die anderen Stationen dürfen während der Übertragung selbst nicht senden, um Kollisionen zu vermeiden.

Aus der WO 03/079708 A1 geht ein ähnliches Verfahren zur Identifizierung eines versteckten Knotens hervor. Hierbei wird von einem sendewilligen Knoten eine Kontrollnachricht an einen benachbarten Knoten, in dessen Umgebung sich ein für den sendewilligen Knoten versteckter Knoten befindet, gesendet und schließlich vom benachbarten Knoten an den versteckten Knoten weitergereicht, der über den benachbarten Knoten eine Quittierungsnachricht an den sendewilligen Knoten zurücksendet. Diese Quittierungsnachricht dient dem sendewilligen Knoten als Indikator für die Existenz eines in der Umgebung des benachbarten Knotens befindlichen versteckten Knotens.

Den Verfahren des Stands der Technik ist gemeinsam, dass durch die Übertragung der RTS-/CTS-Signale bzw. der Kontroll-/Quittierungsnachricht unnötig Übertragungskapazität in mobilen ad-hoc-Netzen verbraucht wird, die der Nutztdatenübertragung nicht zur Verfügung steht. Besonders bei kleinen Nutzdatenpaketen wirkt sich dies signifikant aus. Daher wird bei der Verwendung derartiger Verfahren meist eine untere Nutztdatenpaketgröße definiert.

Außerdem weisen derartige Verfahren eine Stör-Reichweite auf, die größer als die Übertragungsreichweite der Nutzdatenübertragung ist, so dass versteckte Knoten in bestimmten räumlichen Bereichen nicht aufgelöst werden können.

Aufgabe der Erfindung ist es deshalb, ein Verfahren zur Identifizierung von versteckten Knoten in einem ad-hoc-Netz derart weiterzuentwickeln, dass die Übertragungskapazität eines derartigen Verfahrens die Leistungsfähigkeit des Netzes nicht unnötig belastet.

Die Aufgabe wird durch ein Verfahren zur Identifizierung von versteckten Knoten in einem ad-hoc-Netz mit den Merkmalen des Anspruchs 1 gelöst.

Erfindungsgemäß werden die versteckten Knoten in einem mobilen ad-hoc-Netz signalisierungsfrei ohne Nutzung irgendwelcher Kontroll- bzw. Quittierungssignale identifiziert. Hierzu wird die Broadcast-Charakteristik der Funkübertragung genutzt, in dem ein von einem Funkgerät ausgesendetes Signal von allen innerhalb der Reichweite des Funkgeräts befindlichen benachbarten Funkgeräten empfangen wird. Ein Funkknoten beobachtet erfindungsgemäß sämtliche Nutzdatenübertragungen aller seiner benachbarten Knoten, extrahiert bei jedem übertragenen Nutzdaten-Paket die Zieladresse des Nutzdaten-Pakets und vergleicht diese Zieladresse mit Adressen aller in einer Liste befindlichen benachbarten Knoten, die sich aus der Routing-Tabelle ergibt. Entspricht die Zieladresse des Nutzdaten-Pakets einem der in der Liste aufgeführten Adressen, so handelt es sich bei dem Zielknoten, mit dem der benachbarte Knoten kommuniziert, nicht um einen benachbarten Knoten, sondern um einen in der Umgebung des benachbarten Knoten befindlichen versteckten Knotens.

Dieser identifizierte versteckte Knoten in der Umgebung eines benachbarten Knotens wird, falls er sich noch nicht in der Liste des jeweiligen Funkknotens befindet, mit einer Angabe des Zeitpunkts der Identifizierung in die Liste aufgenommen. Zusätzlich wird das übertragene Nutzdaten-Paket hinsichtlich bestimmter Parameter - beispielsweise Datentyp, Paketgröße, Dienstklasse und Absendezeit - analysiert und einer fortlaufenden, in der Liste abgelegten statistischen Auswertung des Datenverkehrs des jeweils benachbarten Knoten mit dem soeben identifizierten versteckten Knoten zugeführt.

Mit Ablegen der Absendezeit des zwischen benachbarten und identifizierten benachbarte versteckten Knoten übertragenen Nutzdaten-Pakets erfolgt in einem bestimmten Zeitabstand eine Überwachung, ob seit dem letzten Zeitpunkt der Überwachung der jeweilige benachbarte oder versteckte Knoten zwischenzeitlich noch einmal identifiziert wurde. Ist der jeweilige benachbarte oder versteckte Knoten seit dem letzten Zeitpunkt der Überwachung nicht aktualisiert worden, so wird der jeweils identifizierte benachbarte oder versteckte Knoten aus der Liste gelöscht.

Ein Ausführungsbeispiel des erfindungsgemäßen Verfahrens zur Identifizierung von versteckten Knoten in einem ad-hoc-Netz wird im folgenden im Detail anhand der Zeichnung erläutert. Die Figuren der Zeichnung zeigen:
- Fig. 1: eine Darstellung der räumlichen Verteilung von sendenden, benachbarten und versteckten Knoten,
- Fig. 2: eine Darstellung des Datenaustauschs in einem RTS-CTS-Verfahren,
- Fig. 3: ein Flußdiagramm des erfindungsgemäßen Verfahrens zur Identifizierung eines versteckten Knotens in einem ad-hoc- Netz und
- Fig. 4: ein Blockschaltbild des erfindungs- gemäßen Systems in jedem Knoten des ad-hoc-Netzes zur Identifizierung eines versteckten Knotens in einem ad- hoc-Netz.

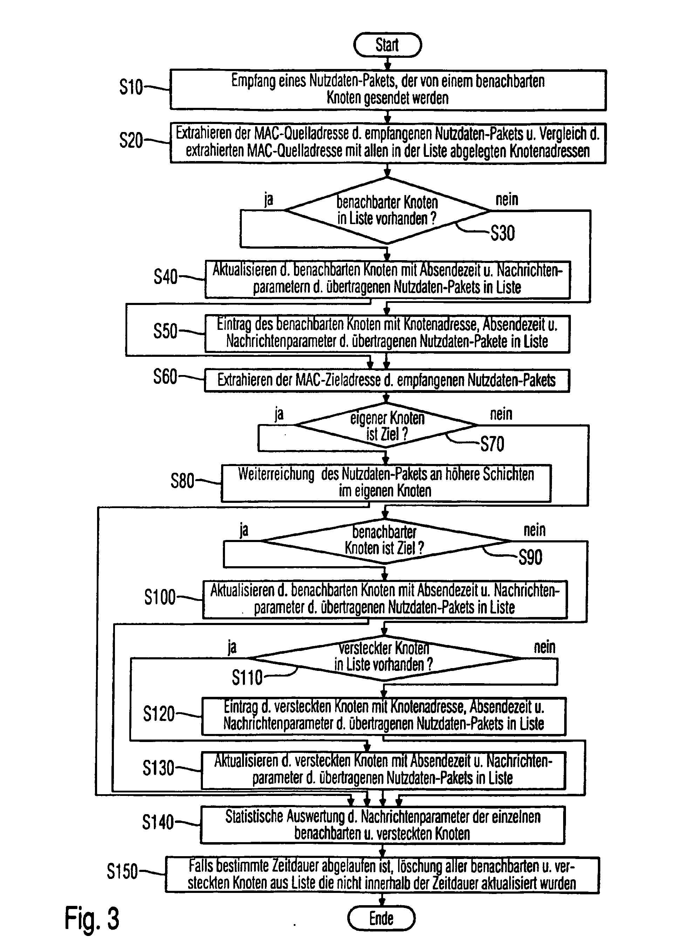

Im folgenden wird das für einen aus allen in einem ad-hoc-Netz befindlichen Knoten ausgewählten Knoten angewendete erfindungsgemäße Verfahren zur Identifizierung eines versteckten Knotens in einem ad-hoc-Netz anhand von Fig. 3 beschrieben:
Im ersten Verfahrensschritt S10 wird vom ausgewählten Knoten im ad-hoc-Netz, der sich in Reichweite eines sendenden Knoten befindet, das vom sendenden Knoten gesendete Nutzdaten-Paket empfangen.
Im Folgenden wird unter Quellknoten derjenige Knoten verstanden, bei welchem das Datenpaket aktuell vorliegt, während unter Zielknoten derjenige Knoten verstanden wird, dem der Quellknoten das Datenpaket zusendet.

Nach dem Empfang des Nutzdaten-Pakets in der physikalischen Schicht des ausgewählten Knoten wird im nächsten Verfahrensschritt S20 in einer übergeordneten Schicht des ausgewählten Knotens die MAC-Quelladresse des empfangenen Nutzdaten-Pakets extrahiert und, da es sich bei dem sendenden Knoten um einen zum ausgewählten Knoten benachbarten Knoten handelt, die extrahierte MAC-Quelladresse mit einer Knotenadresse der in einer Liste abgelegten benachbarten Knoten verglichen. Die in der Liste abgelegten benachbarten Knoten werden aus einer zum ausgewählten Knoten gehörigen Routing-Tabelle bei einem proaktiven Routing-Verfahren in einem bestimmten Zeitraster und bei einem reaktiven Routing-Verfahren im Falle einer Nutzdatenübertragung eines zum ausgewählten Knoten benachbarten Knotens aktualisiert.

In der Abfrage des Verfahrensschritts S30 wird ermittelt, ob der in Verfahrensschritten S20 identifizierte benachbarte Knoten bereits in der Liste vorhanden ist. Ist der soeben identifizierte benachbarte Knoten in der Liste bereits vorhanden, so wird der in der Liste bereits vorhandene benachbarte Knoten im nächsten Verfahrensschritt S40 mit der Absendezeit und den Nachrichtenparametern des übertragenen Nutzdaten-Pakets aktualisiert. Bei den Nachrichtenparametern des übertragenen Nutzdaten-Pakets handelt es sich um Daten wie beispielsweise die Paketgröße, der Datentyp oder die Dienstklasse des übertragenen Nutzdaten-Pakets, die jeweils für den benachbarten Knoten einer statistischen Auswertung zugeführt werden.

Ist der soeben identifizierte benachbarte Knoten in der Liste noch nicht vorhanden, so wird er im nächsten Verfahrensschritt S50 mit seiner Knotenadresse und der Absendezeit und den Nachrichtenparametern des soeben übertragenen Nutzdaten-Pakets in die Liste eingetragen.

Der nächste Verfahrensschritt S60 beinhaltet die Extrahierung der MAC-Zieladresse des soeben empfangenen Nutzdaten-Pakets. In der Abfrage des nächsten Verfahrensschritts S70 wird aus der extrahierten MAC-Zieladresse ermittelt, ob der ausgewählte Knoten das Ziel des übertragenen Nutzdaten-Pakets ist. Ist dies der Fall, so wird das empfangenen Nutzdaten-Paket im folgenden Verfahrensschritt S80 für eine Weiterbearbeitung an die höheren Protokollschichten des ausgewählten Knotens weitergereicht und der statistischen Auswertungen in Verfahrensschritt S140 zugeführt.

Ist das soeben empfangene Nutzdaten-Paket nicht für den ausgewählten Knoten bestimmt, so wird in der nächsten Abfrage des nächsten Verfahrensschritts S90 anhand der extrahierten MAC-Zieladresse ermittelt, ob ein in der Liste bereits eingetragener benachbarter Knoten des ausgewählten Knotens Ziel des soeben empfangenen Nutzdaten-Pakets ist.

Ist dies der Fall, so wird der in der Liste eingetragene benachbarte Knoten im nächsten Verfahrensschritt S100 mit der Absendezeit und den Nachrichtenparametern des übertragenen Nutzdaten-Pakets aktualisiert. Andernfalls wird in Verfahrensschritt S110 abgefragt, ob der als versteckter Knoten identifizierte Knoten bereits als versteckter Knoten in der Liste des ausgewählten Knotens vorhanden ist.

Ist der identifizierte versteckte Knoten bereits in der Liste vorhanden, so wird dieser versteckte Knoten in Verfahrensschritt S130 mit der Absendezeit und den Nachrichtenparametern des soeben übertragenen Nutzdaten-Pakets in der Liste aktualisiert. Im Fall, dass der identifizierte versteckte Knoten in der Liste noch nicht vorhanden ist, wird der identifizierte versteckte Knoten in der Verfahrensschritt S120 mit seiner Knotenadresse und der Absendezeit und den Nachrichtenparametern des soeben übertragenen Nutzdaten-Pakets in der Liste des ausgewählten Knotens eingetragen.

Im vorletzten Verfahrensschritt S140 erfolgt eine aktuelle statistische Auswertung der in der Liste des ausgewählten Knotens abgelegten einzelnen Nachrichtenparametern der von bzw. zu den einzelnen benachbarten und versteckten Knoten übertragenen Nutzdaten-Pakete. Mit dieser statistischen Auswertung kann der Datenverkehr benachbarter und versteckter Knoten des jeweils ausgewählten Knotens charakterisiert werden und darauf aufbauend geeignete Sendezeiten zur Übertragung von Nutzdaten-Pakete durch den jeweils ausgewählten Knoten bestimmt werden, in denen mit keinem Datenverkehr zwischen benachbarten und versteckten Knoten mit hoher Wahrscheinlichkeit zu rechnen ist. Schließlich wird im letzten Verfahrensschritt S150 in einem bestimmten Zeitraster die Liste des ausgewählten Knotens hinsichtlich der Aktualität der eingetragenen benachbarten und versteckten Knoten untersucht. Hierzu wird ermittelt, ob die aktualisiert abgespeicherte Absendezeit des zwischen benachbarten und versteckten Knoten übertragenen Nutzdaten-Pakets innerhalb des letzten Zeitabschnitts aktualisiert wurde. Erfolgte innerhalb des letzten Zeitabschnitts keine Aktualisierung der für jeden benachbarten und versteckten Knoten abgespeicherten Absendezeit, so ist der Eintrag des jeweiligen benachbarten oder versteckten Knotens veraltet und wird folglich aus der Liste gestrichen.

In Fig. 4 ist ein Blockschaltbild des erfindungsgemäßen Systems dargestellt, das in jedem Knoten des ad-hoc-Netzes implementiert ist, um auf diesem Knoten das erfindungsgemäße Verfahren zur Identifizierung von versteckten Knoten in einem ad-hoc-Netz durchführen zu können.

Das erfindungsgemäße System besteht aus einer Überwachungsinstanz 1, die alle empfangenen Nutzdaten-Pakete hinsichtlich der für das erfindungsgemäße Verfahren relevanten Informationen des Nutzdaten-Pakets - MAC-Zieladresse, MAC-Quelladresse und Nachrichtenparameter - analysiert und extrahiert. Die Überwachungsinstanz 1, die bevorzugt in der Netzwerk-Schicht realisiert ist, kann die Extrahierung der relevanten Daten des empfangenen Nutzdaten-Pakets entweder getrennt für eine einzige Schicht, bevorzugt die Netzwerk-Schicht, oder alternativ gebunden für alle Schichten des Knotens durchführen.

Die extrahierten Informationen des empfangenen Nutzdaten-Pakets werden von einer der Überwachungsinstanz 1 nachgeschalteten Auswertungsinstanz 2, die ebenfalls bevorzugt in der Netzwerk-Schicht implementiert ist, an der jeweils korrekten Stelle jedes bekannten bzw. neuen benachbarten oder versteckten Knotens in einer in einer Datenbank 3 abgespeicherten Liste eingetragen. Die Datenbank 3 kann ebenfalls bevorzugt in der Netzwerk-Schicht realisiert sein. Neben dem Eintrag der extrahierten Informationen in die Liste führt die Auswertungsinstanz 2 die statistische Auswertung der Nachrichtenparameter zu jedem in der Liste eingetragenen benachbarten und versteckten Knoten durch.

Die Erfindung ist nicht auf das dargestellte Ausführungsbeispiel beschränkt. Alle vorstehend beschriebenen Merkmale und Maßnahmen können im Rahmen der Erfindung beliebig miteinander kombiniert werden.

## Patentansprüche

1. Verfahren zur Identifizierung von versteckten Knoten in einem ad-hoc-Netz, indem in jeden Knoten des ad-hoc-Netzes jeweils eine Liste mit allen stetig aktualisierten benachbarten Knoten geführt wird und ein für einen Knoten des ad-hoc-Netzes versteckter Knoten in der Umgebung eines zum jeweiligen Knoten benachbarten Knotens identifiziert und in die jeweilige Liste als versteckter Knoten aufgenommen wird, sobald die Zieladresse eines vom benachbarten Knoten gesendeten Nutzdaten-Pakets von allen Adressen der in der Liste jeweils geführten benachbarten Knoten abweicht,
**dadurch gekennzeichnet,**
**dass** in der Liste jedes Knoten für jeden benachbarten Knoten und jeden versteckten Knoten jeweils statistische Informationen über den Datenverkehr zwischen dem benachbarten Knoten und dem in der Umgebung des benachbarten Knotens befindlichen versteckten Knoten abgelegt und statistisch ausgewertet werden, um geeignete Sendezeiten zur Übertragung von Nutzdaten-Paketen zu bestimmen, in denen mit keinem Datenverkehr zwischen benachbarten und versteckten Knoten zu rechnen ist.

2. Verfahren zur Identifizierung von versteckten Knoten nach Anspruch 1,
**dadurch gekennzeichnet,**
**dass** bei jeder Identifizierung eines versteckten Knotens der versteckte Knoten durch Aufnahme des Zeitpunkts der aktuellen Identifizierung in der Liste aktualisiert wird.

3. Verfahren zur Identifizierung von versteckten Knoten nach Anspruch 1 oder 2,
**dadurch gekennzeichnet,**
**dass** die statistische Information aus der statistischen Auswertung der Paketgröße, des Datentyps, der Dienstklasse und/oder der Absendezeit der jeweils zwischen dem benachbarten Knoten und dem versteckten Knoten ausgetauschten Nutzdaten-Pakete gewonnen wird.

4. Verfahren zur Identifizierung von versteckten Knoten nach Anspruch 2,
**dadurch gekennzeichnet,**
**dass** in der Liste jedes Knoten in einem bestimmten Zeitabstand diejenigen benachbarten und/oder diejenigen versteckten Knoten gelöscht werden, die innerhalb des letzten Zeitabstands nicht aktualisiert wurden.

5. Verfahren zur Identifizierung von versteckten Knoten nach einem der Ansprüche 1 bis 4,
**dadurch gekennzeichnet,**
**dass** die Liste jedes Knoten über jeweils benachbarte und versteckte Knoten mit knotenrelevanten Daten aus der Netzwerk-Schicht getrennt in der Netzwerk-Schicht verwaltet wird.

6. Verfahren zur Identifizierung von versteckten Knoten nach einem der Ansprüche 1 bis 4,
**dadurch gekennzeichnet,**
**dass** die Liste jedes Knoten über jeweils benachbarte und versteckte Knoten mit knotenrelevanten Daten aus allen Schichten gebunden in einer der Schichten verwaltet wird.

## Claims

1. Method for identifying concealed nodes in an ad-hoc network, by providing in every node of the ad-hoc network a list containing all continuously up-dated adjacent nodes, by identifying a node, which is concealed for one node of the ad-hoc network, in the vicinity of a node adjacent to the respective node, and by adding the said concealed node to the respective list as a concealed node, as soon as the target address of a user-data packet transmitted from the adjacent node differs from all of the addresses of the adjacent nodes contained respectively in the list,
**characterised in that**
statistical information regarding the data traffic respectively between the adjacent node and the concealed node disposed in the vicinity of the adjacent node is stored in the list in every node for every adjacent node and every concealed node and statistically evaluated in order to determine appropriate transmission times for the transmission of user-data packets, in which the absence of data traffic between adjacent and concealed nodes can be assumed with a high probability.

2. Method for identifying concealed nodes according to claim 1,
**characterised in that**,
with every identification of a concealed node, the concealed node is up-dated in the list by adding the time of the current identification.

3. Method for identifying concealed nodes according to claim 1 or 2,
**characterised in that**,
the statistical information is obtained from the statistical evaluation of the packet size, the data type, the service class and/or the transmission time of the user-data packets exchanged respectively between the adjacent node and the concealed node.

4. Method for identifying concealed nodes according to claim 2,
**characterised in that**
those adjacent nodes and/or those concealed nodes, which were not up-dated within the last time interval, are deleted from the list in every node after a given time interval.

5. Method for identifying concealed nodes according to any one of claims 1 to 4,
**characterised in that**
the list in every node regarding respectively adjacent and concealed nodes is administered with node-relevant data from the network layer separately within the network layer.

6. Method for identifying concealed nodes according to any one of claims 1 to 4,
**characterised in that**,
the list in every node regarding respectively adjacent and concealed nodes is administered with node-relevant data from all layers in a combined manner within one of the layers.

## Revendications

1. Procédé pour identifier des noeuds cachés dans un réseau ad hoc, dans lequel une liste est gérée respectivement avec tous les noeuds adjacents continûment actualisés dans chaque noeud du réseau ad hoc et un noeud caché pour un noeud du réseau ad hoc est identifié à proximité d'un noeud adjacent au noeud respectif et enregistré dans la liste respective en tant que noeud caché, dès que l'adresse cible d'un paquet de données utiles envoyé par le noeud adjacent s'écarte de toutes les adresses des noeuds adjacents conduits respectivement dans la liste,
**caractérisé en ce que**
des informations statistiques respectives concernant le trafic de données entre le noeud adjacent et le noeud caché se trouvant à proximité du noeud adjacent sont classées dans la liste de chaque noeud pour chaque noeud adjacent et chaque noeud caché et statistiquement évaluées, pour déterminer des temps d'envoi appropriés pour la transmission de paquets de données utiles, pendant lesquels il ne peut y avoir aucun trafic de données entre les noeuds adjacents et cachés.

2. Procédé pour identifier des noeuds cachés selon la revendication 1, **caractérisé en ce que**
le noeud caché est actualisé par enregistrement du moment de l'identification actuelle dans la liste lors de chaque identification d'un noeud caché.

3. Procédé pour identifier des noeuds cachés selon la revendication 1 ou 2, **caractérisé en ce que**
l'information statistique est attribuée à partir de l'évaluation statistique de la taille du paquet, du type de données, de la classe de service et/ou du temps d'envoi des paquets de données utiles respectifs échangés entre le noeud adjacent et le noeud caché.

4. Procédé pour identifier des noeuds cachés selon la revendication 2, **caractérisé en ce que**,
les noeuds adjacents et/ou les noeuds cachés, qui ne sont pas actualisés pendant la dernière période de temps, sont effacés de la liste de chaque noeud dans une période de temps déterminée.

5. Procédé pour identifier des noeuds cachés selon l'une des revendications 1 à 4, **caractérisé en ce que**
la liste de chaque noeud est gérée de façon séparée dans la couche de réseau par l'intermédiaire des noeuds adjacents et cachés respectifs avec des données pertinentes aux noeuds provenant de la couche de réseau.

6. Procédé pour identifier des noeuds cachés selon l'une des revendications 1 à 4, **caractérisé en ce que**
la liste de chaque noeud est gérée de façon liée dans une des couches par l'intermédiaire de noeuds adjacents et cachés respectifs avec des données pertinentes aux noeuds provenant de toutes les couches.
